# EUROPÄISCHE PATENTANMELDUNG

(11) **EP 1 419 929 A2**
(43) Veröffentlichungstag der Anmeldung: **19.05.2004**
(21) Anmeldenummer: 03025744.8
(22) Anmeldetag: 10.11.2003
(51) Int. Cl.: B60N 2/56, A47C 7/74, H05B 3/34

(54) **Flexible Heizfolie**

(30) Priorität: 08.11.2002 DE 20217262 U
(71) Anmelder: Winter, Josef, 85296 Rohrbach (DE); McNair, William H., Jr., Piedmont, SC 29673 (US)
(72) Erfinder: Winter, Josef, 85296 Rohrbach (DE); McNair, William H., Jr., Piedmont, SC 29673 (US)
(74) Vertreter: Winter, Brandl, Fürniss, Hübner, Röss, Kaiser, Polte Partnerschaft

(57) **Zusammenfassung**

Es wird eine flexible Heizfolie bereitgestellt, die insbesondere für Sitzheizungen bei Kraftfahrzeugen oder als am Körper zu tragenden Heizfolie, insbesondere in Kleidungsstücken, geeignet ist. Bei dieser Heizfolie sind eine oder mehrere elektrisch leitende Heizbahnen (2), die mit Strom beaufschlagt und somit erwärmt werden können, auf einer flexible Unterlage angeordnet, die eine gewebte Kunststofffolie (1) umfaßt, auf der die Heizbahnen (2) angeordnet sind. Die flexible Unterlage weist zudem einen oder mehrere geschlitze Bereiche (4A,4B) als Dehnungsfugen auf.

## Beschreibung

Die vorliegende Erfindung betrifft eine flexible Heizfolie, insbesondere für Sitzheizungen bei Kraftfahrzeugen oder als am Körper zu tragenden Heizfolie, insbesondere in Kleidungsstücken.

Die potentiellen Einsatzmöglichkeiten für flexible Heizfolien sind vielfältig. Beispiele hierfür sind etwa Kleidungsstücke, die mittels eingearbeiteter flexibler Heizfolien den Körper oder Körperteile des Trägers erwärmen. Hierdurch kann zum einen ein therapeutischer Effekt erzielt werden, wie dies etwa bei sogenannten Heiz- oder Rheumakissen bekannt ist, indem bestimmte Körperpartien mittels einer Heizfolie gezielt erwärmt werden, die in einem entsprechenden Kleidungsstück wie etwa einem Nierengurt, einer Gelenkbandage, einer Weste oder dergleichen, geeignet angeordnet ist.

Zum anderen ist es durch Kleidungsstücke mit eingearbeiteter Heizfolie auch möglich, ein Auskühlen des Trägers bei kalten Außentemperaturen und/oder Fahrtwind zu verhindern. Hierzu können beispielsweise Motorradoder Cabriofahrer entsprechende Jacken, Westen, Nierengurte, Hosen oder Overalls verwenden, in denen an entsprechenden Stellen Heizfolien eingearbeitet sind, die über Batterie oder die Stromversorgung des Fahrzeugs beheizt werden.

Eine weitere exemplarische Einsatzmöglichkeit sind Sitzheizungen in Kraftfahrzeugen wie auch auf Motorrädern.

Wie bei o.g. Kleidungsstücken müssen auch hier die Heizfolien relative große Deformationen ermöglichen, etwa wenn ein Kleidungsstück angezogen wird oder eine Person sich in den Sitz setzt. Daher müssen solche Heizfolien flexibel sein.

Hierzu schlägt bspw. die GM 75 39 613 eine leitfähige Dispersion vor, die mittels gegenüberliegenden Anschlußkanten mit Strom beaufschlagt und dadurch erwärmt wird. Die Dispersion ist allseitig von elektrisch isolierendem Material umgeben und bildet mit diesem eine schmiegsame Heizfolie. Eine solche Heizfolie ist jedoch aufwendig, gegenüber Verletzungen der Isolierschicht defektanfällig und weist darüberhinaus notwendigerweise eine erhebliche Dicke auf, was den Einsatz bspw. für unter der Alltagskleidung zu tragender Heizbandagen ausschließt.

Ähnliches gilt für den in der GM 93 19 701 vorgeschlagenen beheizbaren Nierenschutz, bei dem ein Heizdraht in doppellagigem Neopren angeordnet ist.

Beispielsweise aus der DE 39 38 951 C2 sind Sitzheizungen bekannt, bei der leiterförmige Heizbahnen auf einen gewebten oder ungewebten Textil- oder Vliesstoffestoff mit hoher Permeabilität, beispielsweise "NM-5000"/"20 407FLD" von Nihon Vyliyn/UNITICA, mittels Siebdruckverfahren aufgedruckt werden. Diese Sitzheizung weist jedoch den Nachteil auf, daß bei entsprechender Verformung des Textilgewebes der Kontakt zwischen Gewebe und aufgedruckter Heizbahn leicht zerstört und die so freigelegte Heizbahn unterbrochen wird, insbesondere, da das Textilgewebe keine große Elastizität aufweist und daher größere Verformungen zu großen Spannungen im Gewebe führen. So treten etwa, da die Unterlage nicht nahcgeben kann, beim Setzen in einen entsprechenden beheizten Sitz große Zug- und Scherspannungen an der Oberfläche der Unterlage auf, die die Verbindung mit den Heizbahnen beeinträchtigen. Daher ist die in der DE 39 38 951 C2 vorgeschlagene Unterlage nicht sehr flexibel, was bei dauerhafter Benutzung (ständiges Hineinsetzen und Aufstehen aus dem Sitz mit entsprechender Belastung und Verformung) zum Versagen der Sitzheizung führen kann. Für einen Einsatz in Kleidungsstücken, die teilweise noch erheblich größere Verformungen erfahren, ist diese Unterlage daher ebenfalls ungeeignet.

Schließlich ist es bekannt, beispielsweise für Spiegelheizungen Heizbahnen auf eine Kunststoffolie zu drucken. Dabei sind die Kunststofffolien, die beispielsweise durch Extrudieren oder dergleichen hergestellt sind, relativ unflexibel und steif, Daher knistern sie bei den oben beschriebenen Verformungen, wie sie beim Bewegen in einem Sitz oder in Kleidung mit Heizfolie auftreten, und vermitteln darüberhinaus aufgrund ihrer Steifigkeit ein unangenehm starres Gefühl. Durch auftretende Knickfalten in solchen Folien besteht darüberhinaus die Gefahr, daß die aufgedruckten Heizbahnen sich lösen und unterbrochen werden.

Aufgabe der vorliegenden Erfindung ist es daher, eine flexible Heizfolie zur Verfügung zu stellen, die die o.g. Nachteile vermeidet.

Die Aufgabe wird durch die Merkmale des Anpruchs 1 gelöst.

Bei einer erfindungsgemäßen flexible Heizfolie sind eine oder mehrere elektrisch leitende Heizbahnen, die mit Strom beaufschlagt und somit erwärmt werden können, auf einer flexible Unterlage angeordnet, die eine gewebte Kunststofffolie umfaßt, auf der die Heizbahnen angeordnet sind. Die flexible Unterlage weist zudem einen oder mehrere geschlitze Bereiche als Dehnungsfugen auf.

Die gewebte Kunststoffolie weist zum einen bereits eine hohe Elastizität auf, so daß eine erfindungsgemäße Heizfolie gut verformt werden kann und daher insbesondere für die Anordnung in Kleidungsstücken oder als Sitzheizung geeignet ist. Darüberhinaus haften die vorzugsweise durch Aufdrucken auf der Folie angeordneten Heizbahnen, die beispielsweise aus Silber, Carbon, und/oder Aluminium oder aus einer Legierung dieser Bestandteile bestehen, besonders gut auf der Gewebestruktur der Kunststofffolie, was ein Ablösen und eine entsprechende Unterbrechung der Heizbahnen verhindert. Schließlich zeigt die Kuntsstofffolie aufgrund ihres Gewebeaufbaus auch nicht die Nachteile herkömmlicher Kunststofffolien wie Knistern, Steifigkeit oder Knicken.

Durch die geschlitzen Bereich, die als Dehnungsfugen dienen, vergrößert sich die Verformbarkeit der Unterlage erheblich. Insbesondere treten somit keine bzw. nur geringe Zug- bzw. Scherspannungen auf der Oberfläche der Kunststofffolie auf, die zu einer verschlechterten Haftung und damit einer Ablösung der Heizbahnen auf bzw. von der Unterlage sowie zu einer unerwünschten Verformung der Heizbahnen führen würden.

Bevorzugt weisen eine oder mehrere Heizbahnen teilweise gekrümmte, insbesonder mäander- und/oder sinusförmige Abschnitte auf. Dadurch kann zum einen die Fläche der Heizbahn, bezogen auf die beanspruchte Unterlagenfläche, vergrößert und somit die Heizleistungsdichte gesteigert werden. Zum anderen bieten solche mäander-, sinus- oder ähnlich geformte gekrümmte Abschnitte eine gewisse Dehnungsreserve, so daß es bei einer starken Verformung der Heizfolie nicht zu einem Abreißen der Leiterbahnen kommt. Vorteilhafterweise sind dabei die Schlitze in der Unterlage in Längs- und/oder Querrichtung der mäander-, sinus- oder ähnlich geformten Abschnitte angeordnet.

In einer bevorzugten Ausführung umfaßt die flexible Unterlage zusätzlich eine weiche Schicht, insbesondere eine Schaumstoff-, Textil- oder Vliesschicht, so daß sich insgesamt eine weiche, gut dämpfende Heizfolie ergibt. Dabei kann die weiche Schicht vorzugsweise auf der der Kunststofffolie gegenüberliegenden Seite der Heizbahnen angeordnet sein, so daß diese sandwichartig zwischen weicher Schicht und Kunststofffolie eingebettet und durch diese geschützt sind.

Vorteilhafterweise kann eine erfindungsgemäße Heizfolie beispielsweise im Inneren des Fahrgastraumes eines Kraftfahrzeugs, insbesonder auf einer Sitz- und/oder Armablagefläche, auf dem Sitz eines Kraftrades oder in einem Kleidungsstück, insbesondere einer Jacke, Hose, Weste, einem Overall, einem Nierengurt oder einer Bandage angeordnet sein.

Weitere Vorteile und Merkmale ergeben sich aus den Unteransprüchen und den nachfolgen beschriebenen Ausführungsbeispielen. Hierzu zeigt:
Fig. 1 eine flexible Heizfolie nach einer Ausführung der vorliegenden Erfindung im unverformten Zustand in der Draufsicht; und
Fig. 2 die Heizfolie aus Fig. 1 im verformten Zustand.

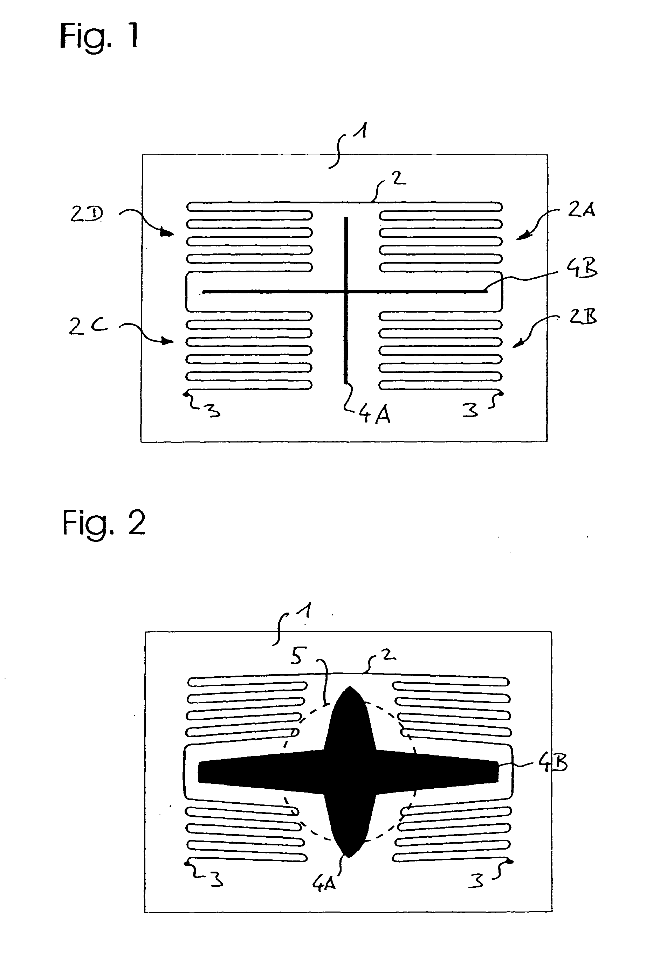

In Fig. 1 ist exemplarisch eine flexible Heizfolie nach einer Ausführung der vorliegenden Erfindung im unverformten Zustand in der Draufsicht dargestellt. Die Heizfolie umfaßt eine flexible Unterlage mit einer gewebten Kunststofffolie 1, auf der eine elektrisch leitende Heizbahn 2 zwischen zwei Elektroden 3 durch Aufdrucken von Silber, Carbon, Aluminium oder einer Mischung von zwei oder drei dieser Bestandteile aufgebracht ist. Die gewebten Kunststofffolie 1 kann beispielsweise die unter dem Namen "CETUS" von der Firma Dynic vertriebene sein. Die Elektroden können beispielsweise mit einer tragbaren Batterie oder dem Stromsystem eines Fahrzeugs, beispielsweise der Autobatterie, verbunden sein (nicht dargestellt) und sich aufgrund ihres elektrischen Widerstandes bei Anlegen einer Spannung und Fließen eines Stromes erwärmen.

Die Heizbahn weist vier mäanderförmige Bereiche 2A, 2B, 2C bzw. 2D auf. Gleichermaßen kann eine erfindungsgemäße Heizfolie sinusförmige oder ähnlich geformte Heizbahnabschnitte aufweisen. Während hier exemplarisch nur eine Heizbahn zwischen den beiden Elektroden 3 angeordnet ist, können gleichermaßen mehrere Heizbahnen zwischen diesen Elektroden 3 oder zwischen zusätzlichen Elektroden (nicht dargestellt) angeordnet sein.

In der Mitte weist die Folie 1 zwei geschlitze Bereiche 4A, 4B auf, die hier exemplarisch in Längs- bzw. Querrichtung der mäanderförmigen Heizbahn 2 angeordnet sind. Im unverformten Zustand der Heizfolie sind diese Schlitze 4A, 4B vorteilhafterweise nahezu oder ganz geschlossen.

Fig. 2 zeigt schematisch die Heizfolie aus Fig. 1, wenn diese verformt wird. Die Verformung wird hier durch eine strichliert angedeutete Kugel 5 bewirkt, die in der Mitte der Folie 1 plaziert wird und so beispielsweise das Setzen eines Fahrgastes in einen Sitz, der mit einer erfindungsgemäßen Heizfolie ausgestattet ist, oder das Abwinkeln eines Ellbogens eines Trägers simulieren soll, der eine Jacke mit einer erfindungsgemäßen Heizfolie trägt.

Wie in Fig. 2 ersichtlich, erweitern sich die Schlitze 4A, 4B unter der Belastung und gestatten so eine Verformung der Folie 1, ohne daß auf deren Oberfläche große Zug- bzw. Scherspannungen auftreten. Gleichzeitig gestattet die Gewebestruktur der Kunststofffoile 1 eine weitere elastische Verformung.

Durch diese Verformungscharakteristik wird zum einen verhindert, daß sich die Heizbahn 2 von der Folie 1 löst bzw. sich der Kontakt zwischen Folie 1 und Heizbahn 2 verschlechert.

Zum anderen bietet die erfindungsgemäße Heizfolie aufgrund ihrer Nachgiebigkeit ein angenehmes Kontakt- und Tragegefühl: beim Hineinsetzen oder Bewegen in einem mit einer solchen Heizfolie ausgestatteten Sitz oder Tragen eines mit einer solchen Heizfolie ausgestatteten Kleidungsstückes entstehen weder Knistergeräusche noch bietet die Folie den unangenehm steifen Widerstand einer herkömmlichen Kunststofffolie ohne Gewebestruktur und geschlitze Bereiche.

Das angenehme Tragegefühl kann vorteilhafterweise noch dadurch erhöht werden, daß auf der gewebten Kunststofffolie 1 eine weiche Schicht aus Textil, Vlies oder Schaumstoff angeordnet ist (nicht dargestellt).

Wie erwähnt zeigt das dargestellte Ausführungsbeispiel nur schematisch die Anwendung einer erfindungsgemäßen Heizfolie. Eine solche Heizfolie kann beispielsweise auf bzw. in der Sitz-, Rücken- oder Armauflagefläche oder Tür- bzw. Seitenverkleidungen eines Kraftfahrzeugs oder der Sitzbank eines Kraftrades angeordnet sein.

Gleichermaßen kann eine erfindungsgemäße Heizfolie in einer Bandage angeordnet und derart am Körper plaziert werden, daß die von der Heizfolie ausgestrahlte Wärme einen therapeutischen Effekt an der entsprechenden Körperpartie auslöst.

Ebenso können eine oder mehrere erfindungsgemäße Heizfolien in oder auf Kleidungsstücken angeordnet sein, um so Wärme auf den Träger der Kleidung zu übertragen und ein Auskühlen des Trägres zu verhindern. Solche Kleidungsstücke sind überall dort besonders vorteilhaft, wo niedrige Außentemperaturen bzw. große Wärmeübergangskoeffizienten (etwa durch Fahrtwind etc.) vorherschen, etwa bei Motorrad- oder Cabriofahrern, Tauchern, Astronauten, Skifahrern oder dergleichen. Die Spannung, die an den Elektroden angelegt wird, kann dabei beispielsweise von einer mitgeführten Batterie erzeugt und vorteilhafterweise von einem Regler so geregelt werden, daß sich eine gleichbleibende Temperatur der Heizfolie ergibt.

## Patentansprüche

1. Flexible Heizfolie mit
einer flexible Unterlage, auf der wenigstens eine elektrisch leitende Heizbahn (2) zwischen
zwei Elektroden (3) angeordnet ist, durch die die Heizbahn mit Strom beaufschlagt werden kann,
**dadurch gekennzeichnet, daß** die flexible Unterlage
eine gewebte Kunststofffolie (1) umfaßt, auf der die wenigstens eine Heizbahn (2) angeordnet ist; und
einen oder mehrere geschlitze Bereiche (4A, 4B) als Dehnungsfugen aufweist.

2. Flexible Heizfolie nach Anspruch 1, **dadurch gekennzeichnet, daß** mehrere Heizbahnen zwischen den zwei Elektroden angeordnet sind.

3. Flexible Heizfolie nach wenigstens einem der vorhergehenden Ansprüche, **dadurch gekennzeichnet, daß** wenigstens eine Heizbahn teilweise gekrümmte, insbesondere mäander- und/oder sinusförmige Abschnitte (2A, 2B, 2C, 2D) aufweist.

4. Flexible Heizfolie nach Anspruch 3, **dadurch gekennzeichnet, daß** die geschlitzen Bereiche (4A, 4B) teilweise in Längs- und/oder Querrichtung der gekrümmten, insbesondere mäander- und/oder sinusförmigen Abschnitte (2A, 2B, 2C, 2D), angeordnet sind.

5. Flexible Heizfolie nach wenigstens einem der vorhergehenden Ansprüche, **dadurch gekennzeichnet, daß** die flexible Unterlage eine weiche Schicht, insbesondere eine Schaumstoff-, Textil- oder Vliesschicht aufweist.

6. Flexible Heizfolie nach wenigstens einem der vorhergehenden Ansprüche, **dadurch gekennzeichnet, daß** die Heizfolie im Inneren des Fahrgastraumes eines Kraftfahrzeugs, insbesondere auf einer Sitz- und/oder Armablagefläche angeordnet ist.

7. Flexible Heizfolie nach wenigstens einem der vorhergehenden Ansprüche, **dadurch gekennzeichnet, daß** die Heizfolie auf dem Sitz eines Kraftrades angeordnet ist.

8. Flexible Heizfolie nach wenigstens einem der vorhergehenden Ansprüche, **dadurch gekennzeichnet, daß** die Heizfolie in einem Kleidungsstück, insbesondere einer Jacke, Hose, Weste, einem Overall, einem Nierengurt oder einer Bandage angeordnet ist.
